# EUROPEAN PATENT SPECIFICATION

(11) **EP 0 385 023 B1**
(45) Date of publication and mention of the grant of the patent: **23.02.1994**
(21) Application number: 89308758.5
(22) Date of filing: 30.08.1989
(51) Int. Cl.: G11B 5/31

(54) **A thin film magnetic read/write head and method of forming the same**
Magnetischer Dünnschichtschreib- und Lesekopf sowie Methode zur Herstellung desgleichen
Tête magnétique de lecture et d'écriture à film mince et méthode de fabrication

(30) Priority: 03.03.1989 US 319144
(43) Date of publication of application: 05.09.1990
(73) Proprietor: SEAGATE TECHNOLOGY INTERNATIONAL, Georgetown, Grand Cayman Island (KY)
(72) Inventor: Jursich, Mark, Prior Lake Minnesota 55372 (US); Dobbins, Scott Daniel, Edina Minnesota 55435 (US)
(74) Representative: Miller, Joseph

(56) References cited:
- EP-A- 0 041 133
- DE-A- 2 648 700
- GB-A- 2 107 504
- PATENT ABSTRACTS OF JAPAN, vol. 12, no. 266 (P-735)(3113), 26 July 1988;& JP-A-6350904

## Description

This invention relates to thin film magnetic read/write heads and methods of forming the same.

As the use of computer systems has increased, the demand for high density storage media has also increased. Thus magnetic recording heads have developed to meet the demand for increased storage density. One method of increasing magnetic recording densities is through the use of magnetic read/write heads having a high intense and highly concentrated fringe field. The fringe field is the magnetic field that extends or "fringes" beyond a gap formed between two poles of the magnetic head. This improved fringe field has been achieved by decreasing the size of the magnetic read/write head and particularly the gap between the two magnetic poles.

The dimensions of magnetic heads have steadily shrunk, employing new technologies to achieve strikingly smaller sizes. One method of fabricating extremely small magnetic recording heads is through the use of thin film technology. Using this method of manufacture, a magnetic recording head is fabricated in much the same manner as semi-conductor integrated circuits are manufactured. Through a series of steps involving masking and selectively depositing materials upon a wafer, microscopic thin film magnetic read/write heads may be manufactured.

Such small thin film magnetic heads, however, suffer from a number of problems. The heads have a high degree of sensitivity to noise signals. Furthermore, stray capacitance due to the separation between the thin film magnetic head and surrounding materials tends to limit the performance of magnetic storage systems using thin film heads. Particularly during a read operation, the performance of a thin film magnetic head could be improved by eliminating stray capacitance and lowering the sensitivity of the head to noise signals from the surrounding environment.

According to one aspect of the present invention, there is provided a thin film magnetic read/write head according to claim 1.

The separating means in the preferred embodiment comprises a separating layer sandwiched between the substrate and the magnetic core.

The connecting means may comprise an electrically conductive stud of, for example, copper.

Preferably the substrate, the magnetic core and the connecting means have greater electrical conductivity than the separating layer.

In the illustrated embodiment the magnetic core comprises a first magnetic layer deposited upon the separating layer, and a second magnetic layer, the first and second magnetic layers having a first region at which the first and second magnetic layers are electrically connected at a via, the second region at which first and second magnetic layers are separated and in which the coil is positioned, and a third region at which first and second magnetic layers are separated and form the gap. The second region may be filled with an insulating means for electrically insulating the first magnetic layer from the second magnetic layer.

Preferably the connecting means contacts the magnetic core at the via.

According to another aspect of the present invention, there is provided a method of forming a thin film magnetic read/write head according to claim 8.

The invention is illustrated, merely by way of example, in the accompanying drawings, in which:-
Figure 1 is a cross sectional view of a portion of a thin film magnetic read/write head according to the present invention; and
Figures 2 to 9 illustrate steps in the formation of the read/write head of Figure 1.

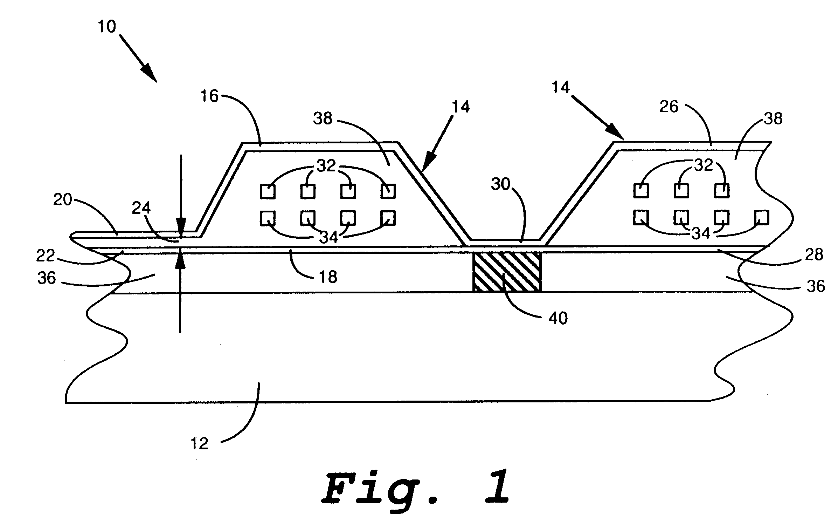

Figure 1 illustrates a thin film magnetic read/write head 10 according to the present invention. The head 10 includes a base or "flyer" substrate 12 and pole pieces or core 14. The substrate 12 may be of electrically conductive material, such as, for example, ALSIMAG (trade mark) material. Typically, the core 14 is formed using thin film layers of magnetic material, such as an iron alloy, e.g. Permalloy (trade mark). the core 14 comprises a front upper portion 16 and a front lower portion 18. Portions 16, 18 form an upper pole tip 20 and a lower pole tip 22 between which a gap 24 is formed. The core 14 also includes a rear upper portion 26 and a rear lower portion 28. The portions 16, 18 and the portions 26, 28 of the core 14 meet at a central area or via 30.

The head 10 of Figure 1 uses two core windings formed by conductors 32, 34. The conductors 32, 34 are in the form of a coil around the via 30 with a portion being sandwiched between the portions 16, 18 of the core 14 and a portion sandwiched between the portions 26, 28 of the core 14. The core 14 is separated from the substrate 12 by a base coat layer 36. The base coat layer 36 is an electrical insulator such as alumina (Al₂O₃). The area between the portions 16, 18 and between the portions 26, 28 is filled with an electrically insulating material 38. Typically, the insulating material 38 is a photo-resist. The gap 24 between the pole tips 20, 22 is filled with alumina.

Also shown in Figure 1 is an electrically conductive stud 40 extending through the base coat layer 36 between the substrate 12 and the via 30 of the core 14. The stud 40 is in electrical contact with the core 14 through the via 30 and the substrate 12. Through the stud 40, an electrical circuit is formed between the core 14 and the substrate 12.

During fabrication, a plurality of heads similar to the head 10 may be deposited across the entire surface of the substrate 12. After the layers of the heads 10 are deposited as shown in Figure 1, the substrate 12 is "diced" or sliced into the individual heads, each carried by a portion of the substrate 12, such that the pole tips 20, 22 and the gap 24 are exposed. The gap 24 and the pole tips 20, 22 of each head may be lapped in a direction generally inward, towards the centre of the head 10, to the desired dimensions. The lapping process is a grinding process in which the exposed portion of the gap 24 is applied to a diamond slurry. Electrical contacts (not shown) are applied to the conductors 32, 34. The completed head may then be attached to some type of carrying fixture (not shown) for use in reading and writing data on a magnetic storage medium such as a data storage disk.

In operation, a magnetic storage medium (not shown) is placed near the pole tips 20, 22 which form the gap 24. During a read operation, the changing magnetic field due to the moving storage medium impresses a magnetic field upon the pole tips. This impressed field is carried around the conductors 32, 34 through the portion 16, the via 30 and the portion 18 of the core 14. This causes an electrical current to be induced in the conductors 32, 34. This electric current is representative of the magnetic field produced by the moving magnetic storage medium. During a write operation, and electric current is caused to flow in the conductor 32 or the conductor 34. This results in a magnetic field in the core 14 which is applied to the storage medium due to the fringing effect at the gap 24 formed between the pole tips 20, 22.

The dimensions of the head 10 are extremely small. At these small dimensions and at the high speed at which the head reads and writes data, stray capacitance may have a significant effect in degrading performance of the head. Specifically, the capacitance due to the separation between the core 14 and the surrounding structure, such as the substrate 12, may degrade performance of the head. Furthermore, the material of the core 14 of the head 10 may act as a conduit for noise to enter the conductors 32, 34. The environment in which the head 10 operates is typically filled with many noise sources including stepper motors, disk drive motors and high frequency electrical equipment. During the read operation, these noise sources could interfere with the information signals carried in the form of electrical currents in the conductors 32, 34 by masking the information being read from the storage medium.

These problems are alleviated, however, by the stud 40 which forms an electrical circuit between the core 14 and the substrate 12 through the base coat layer 36. The stud 40 electrically short circuits stray capacitance formed due to the separation between the core 14 and the substrate 12.

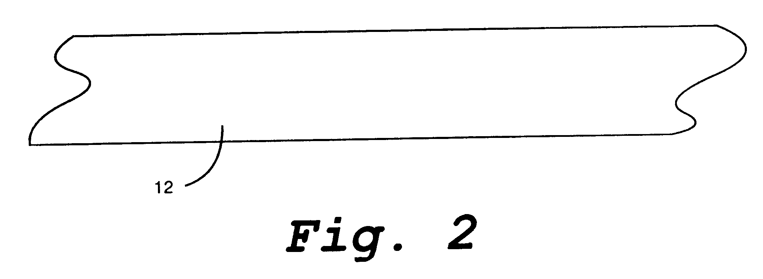

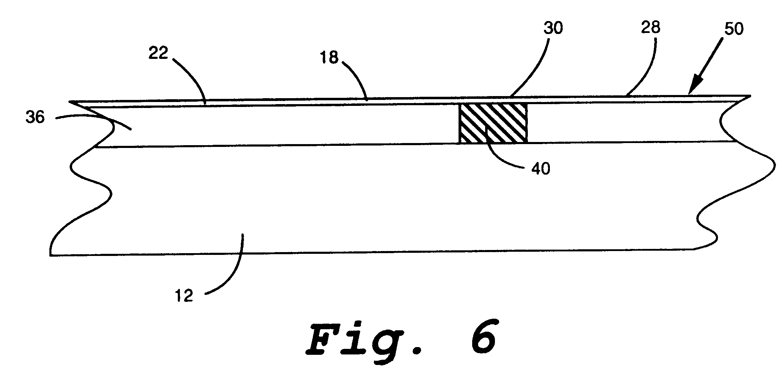

The steps used in fabricating the head 10 of Figure 1 are illustrated in Figures 2 to 9. As shown in Figure 2, the substrate 12 is shown. The substrate 12 is typically large relative to the dimensions of the thin film magnetic read/write head to be formed thereon and is referred to as a "wafer". During the manufacturing process, many thin film heads similar to the head 10 typically are fabricated on a single such substrate 12. Only the fabrication of a single thin film magnetic head 10 is, however, illustrated in the drawings.

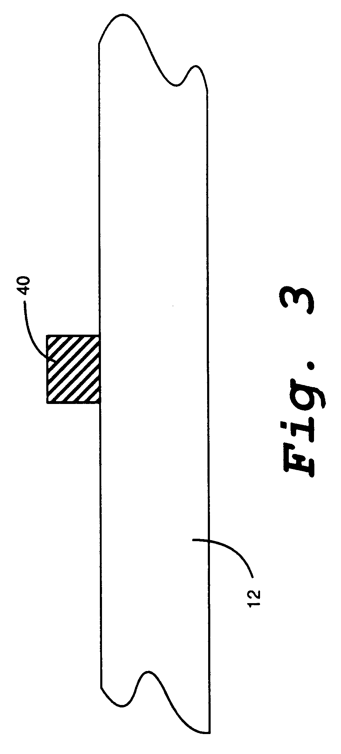

In Figure 3, the substrate 12 is shown following deposition of the electrically conductive stud 40. The stud 40 may be deposited upon the substrate 12 using photo-lithographic masks. Using photo-lithographic masks, the photo-resist is applied across the substrate 12 except for the area where the stud 40 is to be formed. In this area, the photo-resist is in the form of a reverse image, or mould of the stud 40. The material used to form the stud 40 is then deposited into this photo-resist mould. The photo-resist is then chemically removed leaving only the structure shown in Figure 3. Using this technique, the stud 40 has a generally cylindrical shape and is in electrical contact with the base substrate 12. Copper is a suitable material for the stud 40, although other electrically conductive materials may also be used.

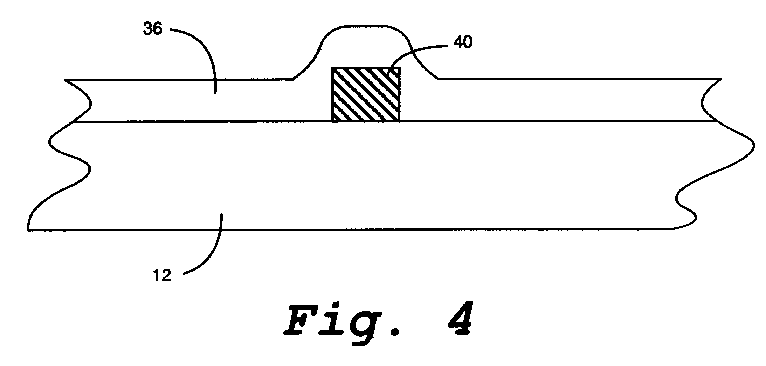

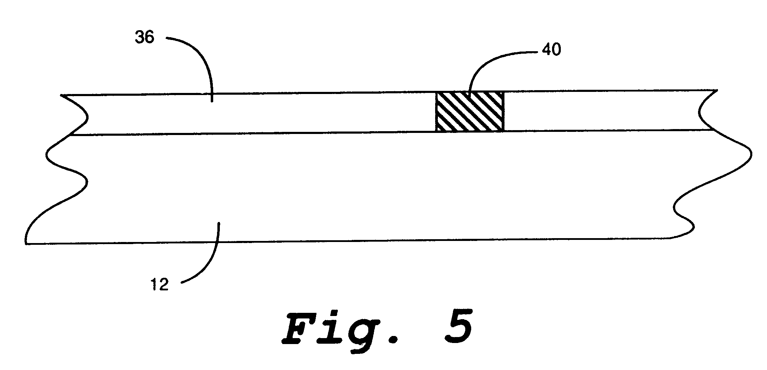

Following the deposition of the stud 40 upon the substrate 12, the base coat layer 36 is deposited across the entire substrate 12 as shown in Figure 4. The base coat layer 36 is of an electrically non-conductive material, for example, alumina and may be applied using sputtering techniques. This results in a rise in the base coat layer 36 due to the stud 40 shown in Figure 4. This rise may be removed by lapping the face of the base coat layer 36. After lapping the base coat layer 36, the cross sectional view resembles that shown in Figure 5.

The lapping process removes a portion of the base coat layer 36 until the face of the stud 40 is exposed. Typically a diamond slurry is used in the lapping process. Lapping may be done over a timed period to ensure enough of the base coat layer 36 is removed from the stud 40 to expose it. Alternatively, the base coat layer 36 may be visually inspected to determine if the face of the stud 40 is exposed. A third method of determining whether enough of the base coat layer 36 has been removed to expose the stud 40 is by detecting the resistance between the substrate 12 and the diamond slurry used in the lapping process. When the face of the stud 40 is exposed to the diamond slurry, the resistance measured between the substrate 12 and the diamond slurry will drop significantly. Typically, during the lapping process a small portion of the stud 40 may be removed along with the base coat layer 36. This is not harmful to the completed head shown in Figure 1.

After the base coat layer 36 has been lapped to the extent shown in Figure 5, and the face of the stud 40 exposed, a thin layer 50 of magnetic material such as Permalloy (trade mark) is applied across the surface. This layer 50 forms the portions 18, 28 of the core 14, as well as the pole tip 22 and the part of the via 30.

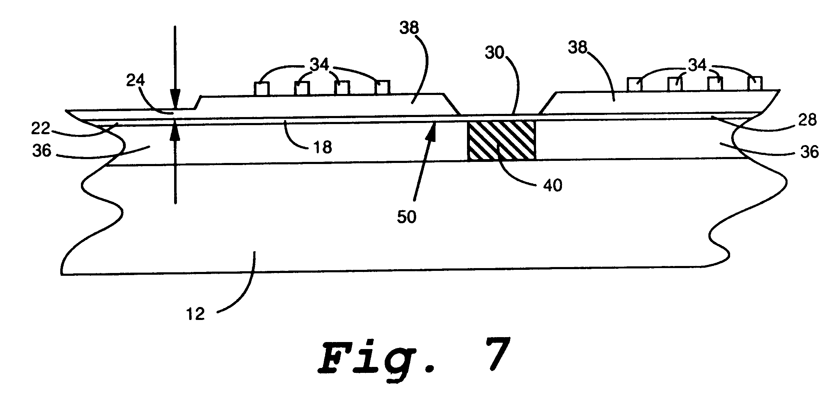

Next, using photo-lithographic techniques, the insulating layer 38 is deposited upon the layer 50 in the shape shown in Figure 7. Alumina is deposited in the gap 24. Conductors 34 are deposited upon the insulating layer 38 and formed into a coil.

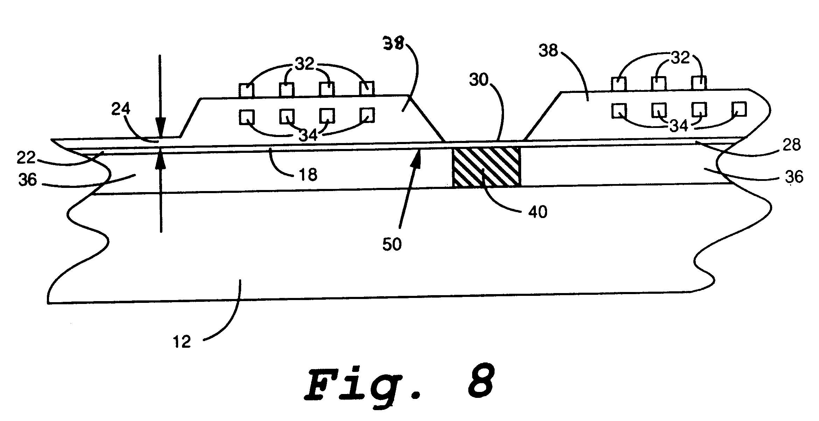

In Figure 8, the insulating layer 38 has been built up slightly using photo-lithographic masking and etching techniques. The conductors 32 are deposited similar to the conductors 34 in the form of a coil.

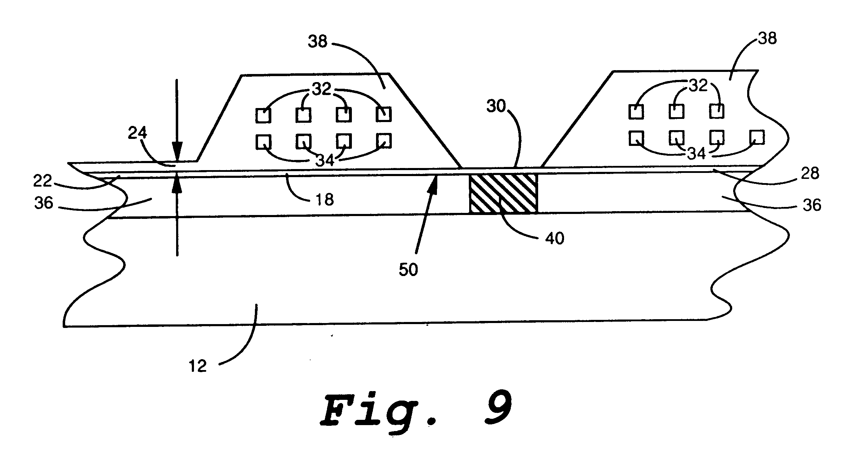

In Figure 9, the insulating layer 38 has been built up and covers the conductors 32, 34. Next, another layer (not shown) of magnetic material is deposited over the structure shown in Figure 9 to form the portions 16, 26 as well as the pole tip 20 and a part of the via 30 as shown in Figure 1.

The core 14 is electrically in contact with the substrate 12 through the stud 40 in the base coat layer 36. Stray capacitance due to the separation between the core 14 and the substrate 12 is shorted by the stud 40 which is electrically connected in parallel with this stray capacitance. In addition, the stud 40 electrically grounds the core 14, which is an advantage because the head 10 is then less sensitive to noise signals present in its operating environment. The stud 40 may be sandwiched between the core 14 and the substrate 12 at positions other than that shown, but a location near the via 30 is preferable.

## Claims

1. A thin film magnetic read/write head (10) comprising: a substrate (12); a thin film magnetic core (14) supported by the substrate including a read/write gap (24) for reading and writing information; electrically insulating separating means (36) for separating the substrate (12) and the magnetic core (14); and a coil (32, 34) within the magnetic core and extending therethrough; characterised by a conductive stud (40) formed separately from and extending between the substrate (12) and the magnetic core (14) for electrically connecting the substrate (12) to the magnetic core (14).

2. A thin film magnetic read/write head as claimed in claim 1 characterised in that the separating means comprises a separating layer (36) sandwiched between the substrate (12) and the magnetic core (14).

3. A thin film magnetic read/write head as claimed in claim 1 or 2 characterised in that the conductive stud is a copper stud.

4. A thin film magnetic read/write head as claimed in claim 2 or claim 3 when dependent thereon, characterised in that the substrate (12), the magnetic core (14) and the conductive stud means (40) have greater electrical conductivity than the separating layer (36).

5. A thin film magnetic read/write head as claimed in claim 1 or 2 characterised in that the magnetic core (14) comprises a first magnetic layer (50) deposited upon the separating layer (36), and a second magnetic layer, the first and second magnetic layers having a first region at which the first and second magnetic layers are electrically connected at a via (30), the second region at which first and second magnetic layers are separated and in which the coil (32, 34) is positioned, and a third region at which first and second magnetic layers are separated and form the gap (24).

6. A thin film magnetic read/write head as claimed in claim 5 characterised in that the second region is filled with an insulating means (38) for electrically insulating the first magnetic layer from the second magnetic layer.

7. A thin film magnetic read/write head as claimed in claim 5 or 6 characterised in that the conductive stud means (40) contacts the magnetic core (14) at the via (30).

8. A method of forming a thin film magnetic read/write head (10) according to claim 1, characterised by comprising: depositing a conductive stud (40) upon the substrate (12) forming an electrically insulating separating means (36) on the substrate (12); and forming the core (14) upon the conductive stud (40) and said electrically insulating separating means (36) whereby the conductive stud (40) is sandwiched between the substrate (12) and the core (14) and is in electrical contact with the substrate (12) and the core (14).

## Patentansprüche

1. Magnetischer Dünnschicht-Lese-/Schreibkopf (10) mit: einem Substrat (12); einem magnetischen Dünnschichtkern (14), der von dem Substrat gehaltert ist und einen Lese-/Schreibspalt (24) zum Lesen und schreiben von Informationen einschließt; elektrisch isolierenden Trenneinrichtungen (36) zum Trennen des Substrates (12) von dem Magnetkern (14); und einer Wicklung (32,34) in dem Magnetkern, die sich durch diesen hindurcherstreckt;
dadurch gekennzeichnet, daß ein leitender Zapfen (40) getrennt von dem Substrat (12) ausgebildet ist und sich zwischen dem Substrat (12) und dem Magnetkern (14) erstreckt, um das Substrat (12) elektrisch mit dem Magnetkern (14) zu verbinden.

2. Magnetischer Dünnschicht-Lese-/Schreibkopf nach Anspruch 1,
dadurch gekennzeichnet, daß die Trenneinrichtung eine Trennschicht (36) umfaßt, die zwischen dem Substrat (12) und dem Magnetkern (14) eingeschichtet ist.

3. Magnetischer Dünnschicht-Lese-/Schreibkopf nach Anspruch 1 oder 2,
dadurch gekennzeichnet, daß der leitende Zapfen ein Kupferzapfen ist.

4. Magnetischer Dünnschicht-Lese-/Schreibkopf nach Anspruch 2 oder Anspruch 3, wenn dieser hierauf zurückbezogen ist,
dadurch gekennzeichnet, daß das Substrat (12), der Magnetkern (14) und der leitende Zapfen (40) eine größere elektrische Leitfähigkeit als die Trennschicht (36) aufweisen.

5. Magnetischer Dünnschicht-Lese-/Schreibkopf nach Anspruch 1 oder 2,
dadurch gekennzeichnet, daß der Magnetkern (14) eine erste auf der Trennschicht (36) abgeschiedene Magnetschicht (50) und eine zweite Magnetschicht aufweist, daß die ersten und zweiten Magnetschichten einen ersten Bereich, an dem die ersten und zweiten Magnetschichten elektrisch an einem Übergangsbereich (30) miteinander verbunden sind, einen zweiten Bereich, an dem die ersten und zweiten Magnetschichten voneinander getrennt sind und in dem die Wicklung (32, 34) angeordnet ist, und einen dritten Bereich aufweisen, an dem die ersten und zweiten Magnetschichten voneinander getrennt sind und den Spalt (24) bilden.

6. Magnetischer Dünnschicht-Lese-/Schreibkopf nach Anspruch 5,
dadurch gekennzeichnet, daß der zweite Bereich mit einem Isoliermittel (38) zur elektrischen Isolation der ersten magnetischen Schicht von der zweiten magnetischen Schicht gefüllt ist.

7. Magnetischer Dünnschicht-Lese-/Schreibkopf nach Anspruch 5 oder 6,
dadurch gekennzeichnet, daß der leitende Zapfen (40) mit dem Magnetkern (14) an dem Übergangsbereich (30) in Kontakt steht.

8. Verfahren zur Herstellung eines magnetischen Dünnschicht-Lese-/Schreibkopfes (10) gemäß Anspruch 1,
gekennzeichnet durch die folgenden Schritte: Abscheiden eines leitenden Zapfens (40) auf dem Substrat (12); Ausbilden einer elektrisch isolierenden Trenneinrichtung (36) auf dem Substrat (12); und Ausbilden des Kerns (14) auf dem leitenden Zapfen (40) und der elektrisch isolierenden Trenneinrichtung (36), wodurch der leitende Zapfen (40) zwischen dem Substrat (12) und dem Kern (14) eingeschichtet ist und in elektrischem Kontakt mit dem Substrat (12) und dem Kern (14) steht.

## Revendications

1. Tête de lecture/enregistrement magnétique (10) à film mince, comprenant : un substrat (12) ; un noyau magnétique (14) à film mince supporté par le substrat, comprenant un entrefer de lecture/enregistrement (24) servant à lire et enregistrer une information ; des moyens séparateurs (36) isolants de l'électricité, servant à séparer le substrat (12) et le noyau magnétique (14) ; et une bobine (32, 34) contenue dans le noyau magnétique et s'étendant à travers ce noyau ; caractérisée par un plot conducteur (40) formé séparément du substrat (12) et du noyau magnétique (14) et s'étendant entre ces éléments, pour connecter électriquement le substrat (12) et le noyau magnétique (14).

2. Tête de lecture/enregistrement magnétique selon la revendication 1, caractérisée en ce que les moyens séparateurs comprennent une couche séparatrice (36) interposée entre le substrat (12) et le noyau magnétique (14).

3. Tête de lecture/enregistrement magnétique à film mince selon la revendication 1 ou 2, caractérisée en ce que le plot conducteur est un plot en cuivre.

4. Tête de lecture/enregistrement magnétique à film mince selon la revendication 2 ou 3 lorsqu'elle y est rattachée, caractérisée en ce que le substrat (12), le noyau magnétique (14) et le moyen (40) formant plot conducteur ont une plus grande conductibilité électrique que la couche séparatrice (36).

5. Tête de lecture/enregistrement magnétique à film mince selon la revendication 1 ou 2, caractérisée en ce que le noyau magnétique (14) comprend une première couche magnétique (50) déposée sur la couche séparatrice (36), une deuxième couche magnétique, les première et deuxième couches magnétiques ayant une première région dans laquelle les première et deuxième couches magnétiques sont connectées électriquement au droit d'un passage (30), une deuxième région dans laquelle les première et deuxième couches magnétiques sont séparées, et dans laquelle la bobine (32, 34) est disposée, et une troisième région, dans laquelle les première et deuxième couches magnétiques sont séparées et forment l'entrefer (24).

6. Tête magnétique de lecture/enregistrement selon la revendication 5, caractérisée en ce que la deuxième région est comblée d'un moyen isolant (38) servant à isoler électriquement la première couche magnétique de la deuxième couche magnétique.

7. Tête magnétique de lecture/enregistrement selon la revendication 5 ou 6, caractérisée en ce que le moyen (40) formant plot conducteur est en contact avec le noyau magnétique (14) au droit du passage (30).

8. Procédé de formation d'une tête (10) de lecture/enregistrement magnétique à film mince selon la revendication 1, caractérisé en ce qu'il consiste à déposer un plot conducteur (40) sur le substrat (12) ; former un moyen séparateur (36) isolant de l'électricité sur le substrat (12) ; et former le noyau (14) sur le plot conducteur (40) et sur ledit moyen séparateur (36) isolant de l'électricité, de sorte que le plot conducteur (40) est interposé entre le substrat (12) et le noyau (14) et est en contact électrique avec le substrat (12) et avec le noyau (14).
